# EUROPÄISCHE PATENTSCHRIFT

(11) **EP 0 909 605 B1**
(45) Veröffentlichungstag und Bekanntmachung des Hinweises auf die Patenterteilung: **16.05.2001**
(21) Anmeldenummer: 98113368.9
(22) Anmeldetag: 17.07.1998
(51) Int. Cl.: B23K 10/00

(54) **Vorrichtung und Verfahren zum Zurückziehen eines Lichtbogens**
Arc retract device and method
Dispositif et procédé pour rétrécir un arc

(30) Priorität: 28.07.1997 US 901640
(43) Veröffentlichungstag der Anmeldung: 21.04.1999
(73) Patentinhaber: THE LINCOLN ELECTRIC COMPANY, Cleveland, Ohio 44117-1199 (US)
(72) Erfinder: Daniel, Joseph Allen, Mentor, Ohio 44060 (US)
(74) Vertreter: Hennicke, Ernst Rüdiger,Dipl.-Ing.

(56) Entgegenhaltungen:
- US-A- 4 996 407
- US-A- 5 620 617

## Beschreibung

Die Erfindung liegt auf dem Gebiet von Plasma-Lichtbogen-Schweißeinrichtungen und betrifft eine verbesserte Schaltung und ein Verfahren zum Zurückziehen des Lichtbogens an bzw. in den Plasmabrenner, wenn die Lichtbogenlänge größer wird als dies die von einer Stromversorgung zur Verfügung gestellte Leistung zuläßt.

Im Betrieb von Plasma-Lichtbogeneinrichtungen gibt es zwei voneinander verschiedene Betriebszustände des Schweißbrenners. Im Pilotlichtbogenmodus brennt der Lichtbogen des Brenners zwischen einer Brennerelektrode und der zugehörigen Brennerdüse, bis es zum Einsatz des Brenners zum Schneiden oder anderweitigen Bearbeiten eines Metallwerkstückes kommt. Beim Schneiden, also dem eigentlichen Betriebszustand, schlägt der Plasmalichtbogen von der Elektrode auf das Werkstück über und brennt dann zwischen diesen beiden Teilen. Beim Bearbeiten des Werkstückes kann es zum Auslöschen des Lichtbogens kommen, wenn dessen Länge, also die Überschlagweite zwischen Elektrode und Werkstück soweit vergrößert wird, daß die Leistungsfähigkeit der Gleichstromversorgung nicht mehr ausreicht, den Brenner zu betreiben. Es ist daher üblich geworden, eine Plasmalichtbogeneinrichtung mit einer Lichtbogen-Rückzugschaltung zu versehen, die bewirkt, daß der Lichtbogen vom Werkstück gewollt zurückgezogen wird, um zwischen Elektrode und Düse weiterzubrennen, wenn die Lichtbogenlänge, also im allgemeinen der Abstand zwischen Elektrode und Werkstück, einem Wert nahekommt, bei dem ein Erlöschen des Lichtbogens zu erwarten ist.

Aus der US-PS 4,996,407 ist eine Schaltung bekannt, bei der die Spannung zwischen der Düse und dem Werkstück eines Plasmalichtbogenbrenners überwacht wird. Wenn diese von der Stromversorgung angelegte Spannung einen bestimmtem Wert übersteigt, wird ein Schalter in dem Pilotlichtbogenschaltungszweig geschlossen, wodurch es zu einem Übergang des Lichtbogens vom Werkstück zur Düse kommt. Dieses ältere Patent ist somit auf einen Schaltkreis gerichtet, bei dem ein Komparator den Betriebszustand eines Leistungs- oder Hauptschalters in der Pilotlichtbogenschaltung des Plasmalichtbogenbrenners in Abhängigkeit von einem Signal regelt bzw. steuert, das kennzeichnend für die Spannung der Stromversorgung ist. Wenn die Spannung zwischen der Düse und dem Werkstück geringer wird als ein voreingestellter Wert, wird der Leistungsschalter geöffnet, um den Plasmabrenner in seinen Schweiß- bzw. Betriebszustand zu schalten. Der Komparator schaltet den Plasmabrenner in den Pilotlichtbogen-Betriebszustand zurück, indem er den Leistungsschalter in der Pilotlichtbogenschaltung schließt, wenn die zwischen Werkstück und Düse anliegende Spannung einen voreingestellten Wert überschreitet. Der aus dieser Druckschrift bekannte Stand der Technik soll hier zur Erläuterung einer Anordnung und eines Verfahrens erwähnt sein, bei denen ein Spannungswert überwacht wird, der mit einem Signal verglichen wird, das eine Referenzspannung darstellt, um den Lichtbogen vom Werkstück zur Düse zurückzuziehen, wenn die überwachte Spannung größer wird als die Referenzspannung. Nachteilhaft an dieser Schaltung ist es, daß sie von der Spannung der Stromversorgung gesteuert bzw. geregelt wird. Dies hat zur Folge, daß die Spannung zwischen dem Werkstück und der Düse kontrolliert werden muß. Auch mit dieser vorbekannten Schaltung ist es jedoch möglich, ein Rückziehen des Lichtbogens eines Plasmabrenners bei Bedarf zu erreichen.

Aus der US-PS 5,620,617 ist es bekannt, das Ausgangssignal eines herkömmlichen Fehlerverstärkers zu verwenden, um die Stromversorgung zu steuern bzw. zu regeln. Hierzu wird das Ausgangs-Signal des Fehlerverstärkers mit einer ausgewählten, voreingestellten Spannung verglichen, die ein Maß für die maximale Ausgangsspannung der Stromversorgung darstellt und bei deren Erreichen ein Signal für das Zurückziehen des Lichtbogens erzeugt wird. Das Ergebnis dieses Signalvergleiches wird also dazu verwendet, um den Lichtbogen vom Werkstück zur Düse zurückzuzuziehen, wenn das Ausgangssignal des Fehlerverstärkers ansteigt und einen voreingestellten Spannungswert erreicht, der als charakteristischer Wert oder Grenzwert der Gleichstromversorung bezeichnet werden kann.

In den vorgenannten Patenten werden die Gründe für und die Vorteile des Zurückziehens des Lichtbogens erläutert, wenn die Spannung des Schneidlichtbogens während des Bearbeitungvorganges über eine voreingestellten Wert ansteigt. Die Plasmalichtbogeneinrichtung kann hierdurch automatisch in den Pilotlichtbogenmodus zurückgeschaltet werden, so daß es nicht zu einem Abreißen oder Erlöschen des Schweißlichtbogens kommt. Die Einzelheiten der in diesen Patenten beschriebenen Schweißeinrichtungen, die Erfordernisse für und Vorteile der dort beschriebenen Lichtbogenrückzugsschaltungen für Plasmalichtbogensysteme müssen hier nicht wiederholt werden.

Aus der vorgehenden Beschreibung des Standes der Technik ist der Hintergrund ersichtlich, vor dem sich die Erfindung bewegt. Bekannte Rückzugsschaltungen und Verfahren zum Zurückziehen des Lichtbogens haben sich durchweg als kompliziert und teuer in der Anwendung erwiesen und haben die Wirksamkeit bzw. den Wirkungsgrad der Plasmalichtbogeneinrichtungen während der Schneid- oder Schweißoperationen verringert. Es ist sehr wichtig, den Plasmalichtbogen zwischen zwei Bearbeitungsvorgängen zuverlässig aufrecht zu halten, da es ohne die Möglichkeit, den Lichtbogen zwischen den Bearbeitungsvorgängen zurückzuziehen, erforderlich ist, vor jedem Schneid- bzw. Schweißvorgang den Lichtbogen neu durch eine geeignete Startsequenz für den Brenner zu starten. Derartige Startsequenzen für den Lichtbogen kosten Zeit, sind teuer und unökonomisch und führen dazu, daß die wirtschaftliche Akzeptanz von Plasmalichtbogenbrennern nur gering ist.

Es ist also erwünscht, wenn nicht gar erforderlich, den Lichtbogen nach Beendigung einer Schneid- oder Schweißbearbeitung eines Werkstückes am Brennen zu halten und ihn hierzu in oder an den Brenner in eine Position zwischen Düse und Elektrode zurückzuziehen, um einen effizienten Betrieb des Plasmalichtbogenbrenners zu ermöglichen. Durch Zurückzug des Lichtbogens an die Düse wird ein Pilotlichtbogen auferechterhalten, so daß es nicht erforderlich ist, den Lichtbogen für eine neue Bearbeitung eines Werkstückes vollständig neu zu zünden. Dieses Merkmal eines Plasmalichtbogensystems ist besonders in solchen Fällen zweckmäßig, wenn es darum geht, Streckmetall zu trennen oder in kurzer Zeit mehrere verschiedenen Metallstücke nacheinander auszuschneiden. Der Lichtbogen wird aufrechterhalten, indem es dem Strom ermöglicht wird, über die Düse weiterzufließen, bevor es zu einem Erlöschen des Betriebslichtbogens infolge von zu geringer Leistung der Stromversorgung kommen kann. Zum Unterbrechen oder Abreißen des Betriebslichtbogens kommt es dann, wenn die Elektrode vom Werkstück weg bewegt wird, wodurch die erforderliche Lichtbogenspannung soweit ansteigt, daß die Stromversorgung nicht mehr in der Lage ist, diese Spannung zu liefern und den Brenner zu betreiben. In diesem Fall reißt der Lichtbogen ab oder erlöscht, wenn keine Nebenleitung zur Verfügung gestellt wird, über die der Lichtbogen mit geringerer Spannung brennen kann. Eine solche Nebenleitung wird erzeugt, indem die Düse wieder an die Stromversorgung angeschlossen wird, wozu der übliche Leistungs-Hauptschalter im Pilotlichtbogenschaltkreis geschlossen wird. Bei den bekannten Lichtbogenrückzugsschaltungen wird hierzu die Spannung gemessen, wodurch die theoretische Leistungsfähigkeit einer vorhandenen Stromversorgung oder Stromquelle nur unzureichend ausgenutzt wird.

Aufgabe der Erfindung ist es, die vorbeschriebenen Nachteile zu vermeiden und eine verbesserte Lichtbogenrückzugsschaltung und ein neues Verfahren zum Zurückziehen des Lichtbogens bei einem Plasmalichtbogenbrenner zu schaffen, womit ein von irgendeinem Spannungssignal eines Fehlerverstärkers oder unabhängigen Sollwertausgangs der Stromversorgung unabhängiger Betrieb möglich ist. Dabei soll es erfindungsgemäß möglich sein, auf eine Messung der an dem Regel- bzw. Stromkreis des Plasmalichtbogenbrenners anliegenden Spannung zum Zwecke des Zurückziehens des Lichtbogens in bzw. an die Düse zu verzichten.

Diese Aufgabe wird mit der Erfindung durch eine Verbesserung in der Lichtbogenrückzugsschaltung eines Plasmalichtbogenanordnung mit einem Schweißbrenner und durch ein neues Verfahren zum Zurückziehen des Lichtbogens bei einem solchen Brenner erreicht. Die erfindungsgemäße Lichtbogenrückzugsschaltung wird dazu verwandt, den Hauptschalter aus der offenen Schaltstellung in eine geschlossene Stellung zwischen dem Arbeitsmodus und dem Pilotlichtbogenmodus umzuschalten. Erfindungsgemäß wird hierbei ein erstes Signal erzeugt, das den von der Stromversorgung an dem denPlasmabrenner betreibenden Leistungsschaltkreis anliegenden Strom representiert, und es wird ein zweites Signal erzeugt, das ein Maß für einen Strom darstellt, der geringer ist als der für den Betrieb des Schweißbrenners vorgesehene Sollwertstrom. Der Leistungsschalter im Pilotlichtbogenschaltkreis wird dann geschlossen, wenn das erste Signal im wesentlichen gleich groß wird wie das zweite Signal. Auf diese Art und Weise wird der Bearbeitungslichtbogen wieder auf die Düse übertragen, wenn der von der Stromversorgung zur Verfügung gestellte Ausgangsstrom auf einen Wert absinkt, der niedriger ist als der Stromsollwert, auf den die Stromversorgung eingestellt wurde. In bevorzugter Ausgestaltung der Erfindung steht das Stromniveau, mit dem der Momentanstrom von der Stromversorgung verglichen wird, in einem prozentualen Verhältnis zu dem Sollwert des Schneidstroms, auf den die Stromversorgung eingestellt ist. In der praktischen Anwendung liegt dieses prozentuale Verhältnis bevorzugt im Bereich zwischen 60 und 80%. Mit der Erfindung ist es möglich, die den Brenner betreibende Stromversorgung mit ihrer höchsten Leistungsfähigkeit über verschiedene Stromvoreinstellungen zu betreiben, die während der Bearbeitung eines Werkstückes zur Anwendung kommen.

Mit der Erfindung wird ein neues und besonders vorteilhaftes Verfahren geschaffen, mit dem der Lichtbogen eines Schweißbrenners einer Plasmalichtbogeneinrichtung zurückgezogen werden kann, um in den Zündlichtbogenmodus zurückzuschalten. Verfahrensgemäß wird hierzu ein erstes Signal erzeugt, das den von der Stromversorgung zur Verfügung gestellten, am Leistungsschaltkreis des Brenners anliegenden Momentanstrom representiert, und es wird ein zweites Signal erzeugt, das ein Maß für eine Stromstärke darstellt, die unter dem Stromsollwert liegt. Der Haupt- oder Leistungsschalter des Zündlichtbogenschaltkreises wird dann geschlossen, wenn das erste Signal etwa gleichgroß wird wie das zweite Signal. In zweckmäßiger Weiterbildung dieses erfindungsgemäßen Verfahrens steht das Stromniveau, mit dem der tatsächliche Ausgangsstrom der Stromversorgung verglichen wird, in einem prozentualen Verhältnis zum Stromsollwert, wie er im jeweiligen Bearbeitungsmodus zur Anwendung kommt. Dieses prozentuale Verhältnis liegt in der Praxis üblicherweise zwischen 60 und 80%.

Mit der Erfindung wird ein besonders vorteilhaftes Verfahren und eine überaus zweckmäßige Schaltung der oben beschriebenen Art geschaffen, womit es möglich ist, die von der Gleichstromquelle zur Verfügung gestellte Leistung ohne Einschränkungen im Betrieb des Schneidlichtbogens vollständig auszunutzen. Die Erfindung erlaubt in vorteilhafter Weise einen Schneidbetrieb des Brenners einer Plasmalichtbogeneinrichtung bis zu einem Punkt, an dem die Stromversorgung tatsächlich ihre maximale Ausgangsleistung bei einem vorgegebenen Schneidstrom erreicht. Mit dem erfindungsgemäßen Verfahren bzw. dem neuen Schaltkreis ist es in vorteilhafter Weise möglich, einen Schneidlichtbogen während der Bearbeitung eines Werkstückes zu erzeugen, der auch bei größeren Abständen zum Werkstück als bei den bekannten Einrichtungen noch eine Bearbeitung erlaubt, wobei ein Durchschlagen des Stroms in die Düse beim Zurückziehen des Lichtbogens verringert wird und auch die Größe des Leistungsschalters in der Zündlichtbogenschaltung verringert werden kann. Darüber hinaus wird mit der Erfindung auch eine Beschädigung der Düse des Plasmalichtbogenbrenners infolge von Stromüberschlägen vermieden.

Diese und weitere Merkmale und Vorteile der Erfindung ergeben sich aus der nachfolgenden Beschreibung und den Zeichnungen, worin eine bevorzugte Ausführungsform der Erfindung an einem Beispiel näher erläutert wird. Es zeigt:
- Fig. 1: ein Schaltbild eines Standardschaltkreises für einen Plasmalichtbogenbrenner mit einer Elektrode, einer Düse und einem Hauptschalter zum Umschalten zwischen einem Pilotlichtbogenbetrieb und einem Schneid- oder Betriebszustand des Brenners;
- Fig. 2: einen Teilschaltkreis einer ersten Schaltung zum Umschalten aus dem Pilotlichtbogenbetrieb in den Bearbeitungs- oder Schneidbetrieb sowie eine eine bevorzugte Ausführungsform der vorliegenden Erfindung darstellende zweite Schaltung zum Zurückziehen des Lichtbogens und Umschalten zwischen dem Schneidbetrieb und dem Zündlichtbogenbetrieb des Brenners;
- Fig. 3: eine graphische Darstellung des Verhältnisses von Ausgangsstrom und Ausgangsspannung einer herkömmlichen Gleichstromversorgung, wie sie für den Betrieb eines Plasmalichtbogenbrenners verwendet wird, und zwar bei Eingangsspannungen von entweder 253 Volt Wechselstrom (VAC) oder 187 Volt Wechselstrom (VAC);
- Fig. 4: ein Schaubild zur Darstellung der Betriebscharakteristika der bevorzugten Ausführungsform der Erfindung nach Fig. 2 bei Vergrößerung des Lichtbogen- oder Überschlagabstands im Betrieb mit einer Eingangsspannung von 253 Volt Wechselstrom (VAC);
- Fig. 5 und 6: Funktionsgraphen der Spannung zur Darstellung der Merkmale der bevorzugten Ausführungsform der vorliegenden Erfindung, wie sie schematisch in Fig. 2 dargestellt ist; und
- Fig. 7: einen Graph zur Darstellung der Abhängigkeit des Lichtbogenrückzugsstroms vom Lichtbogenschneidstrom für die bevorzugte Ausführungsform der Erfindung.

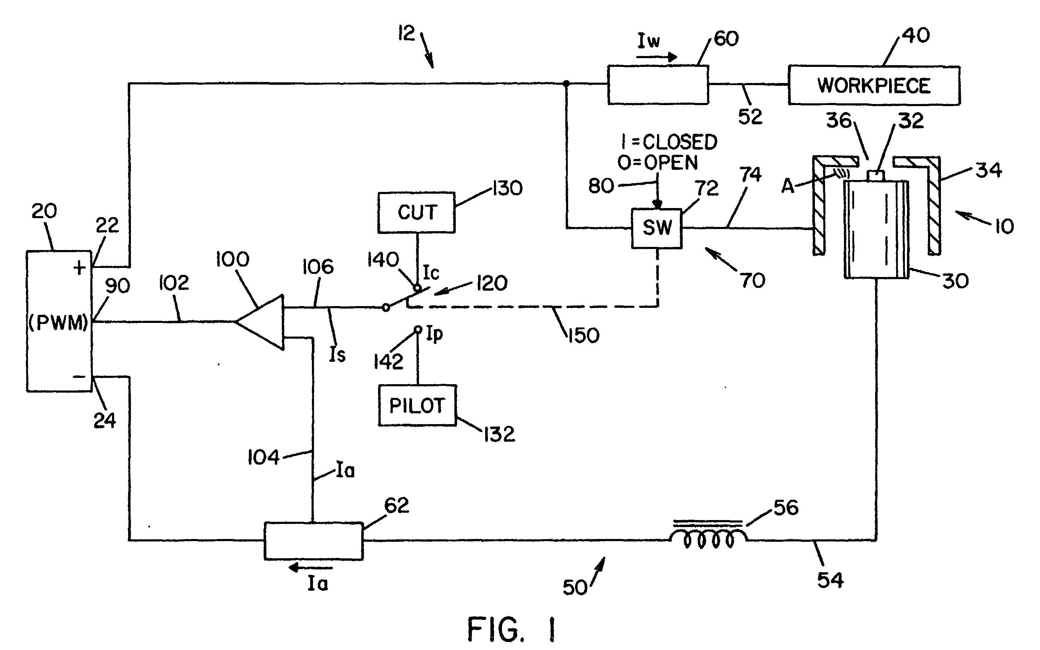

Die Darstellungen in den Zeichnungen dienen lediglich dazu, eine bevorzugte Ausführungsform der Erfindung zu erläutern, ohne diese jedoch hierauf zu beschränken. Fig. 1 zeigt eine herkömmliche Schaltung für eine Plasmalichtbogenanordnung, bei der einem Brenner 10 ein von einer Gleichstromversorgung 20 betriebener Regelkreis 12 zugeordnet ist. Die Stromversorgung hat eine erste Ausgangsklemme 22 mit positiver Polung und eine zweite negative Ausgangsklemme 24. Die Stromversorgung besteht üblicherweise im wesentlichen aus einem Inverter und kann durch Verändern der Spannung an einem Pulsbreiten-Modulator (PWM) eingestellt werden, um einen erwünschten voreingestellten Strom zu liefern, der während eines Betriebs- oder Schneidzustands ein höheres Niveau (beispielsweise 40 bis 60 Ampère) und während eines Zündlichtbogen- oder Pilotlichtbogenbetriebs ein niedrigeres Niveau hat, das beispielsweise im Bereich zwischen 15 und 30 Ampère liegt. Der Brenner 10 weist eine Elektrode 30 mit einer Elektrodenspitze 32 auf, die von einer Düse 34 umgeben ist, in der sich eine Öffnung 36 für den Durchtritt eines Plasmalichtbogens befindet. Der Brenner wird gegenüber einem Werkstück 40 aus einem geeigneten Metall angeordnet, das während seiner Bearbeitung Teil des Schaltkreises bildet, indem es über einen Leistungsschaltkreis 50 über die Leitungen 52 und 54 von Gleichstrom beaufschlagt wird.

Die Leitung 52 ist am Werkstück 40 angeschlossen, während die Leitung 54 an der Elektrode 30 anliegt. Der Leistungsschaltkreis 50 weist auch eine herkömmliche Drosselspule 56 auf und hat Strommeßeinrichtungen (Shunts) 60,62 zum Ermitteln des Werkstückstroms Iw und des Gesamtausgangsstroms a der Stromversorgung. Wenn das Werkstück von der Düse 34 wegbewegt oder vollständig entfernt wird, fließt kein Strom durch die Leitung 52 zum Werkstück 40. Im Pilotlichtbogenbetrieb fließt der Strom in einem Schaltkreis 70 über einen Leistungsschalter 72, der in eine Leitung 74 eingeschaltet ist und über den .die Düse an die Stromversorgung anschließbar ist. In der Leitung 74 kann auch noch ein den Strom begrenzender Widerstand (nicht dargestellt) eingeschaltet sein. Die Stellung des Leistungsschalters 72 wird über ein Signal gesteuert, das an einer Signalsteuerleitung 80 am Schalter anliegt. Bei der dargestellten Ausführungsform bewirkt ein logisches Signal "1" in der Signalleitung 80, daß der Leistungsschalter 72 geschlossen wird. Entsprechend hat ein an der Leitung 80 anstehendes logisches Signal "0" zur Folge, daß der Leistungsschalter 72 geöffnet wird. Bei geschlossenem Schalter 72 ist die Düse 34 über die Leitung 74 am Ausgang der Stromversorgung 20 angeschlossen, so daß dann Strom zwischen der Elektrode und der Düse fließen kann und sich dabei ein Pilotlichtbogen oder Zündlichtbogen A ausbildet, wie dies in Fig. 1 erkennbar ist. Für den Übergang in den Pilotlichtbogenbetrieb wird zuerst der Schalter 72 geschlossen, woraufhin der Lichtbogen A in die in Fig. 1 gezeigte Zündlichtbogenposition gelangt. Wenn der Schalter 72 geöffnet wird, liegt eine Spannung von der Stromversorgung 20 zwischen Elektrode 30 und Werkstück 40 an, wenn sich das Werkstück in einer Bearbeitungsstellung nahe des Brenners 10 befindet. Der Widerstand des Lichtbogens bestimmt dabei die Spannung, die erforderlich ist, um einen vorgewählten Schneidstrom aufrechtzuerhalten.

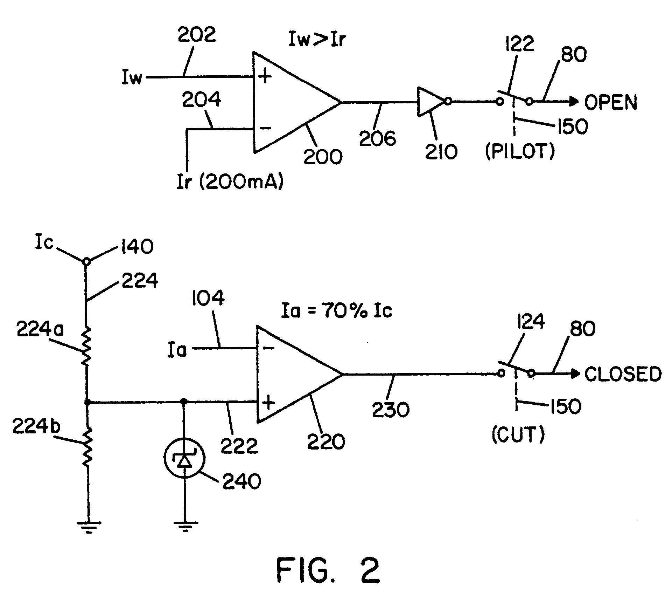

Die Stromversorgung wird mit Hilfe einer Pulsbreiten-Modulation geregelt, wobei der Ausgangsstrom mittels eines Spannungseingangssignals an einem Eingang 90 eingestellt wird, das von einem Fehlerverstärker 100 über eine Ausangsleitung 102 zur Verfügung gestellt wird. Die Spannung in der Ausgangsleitung 102 ist die Spannung, die dem Pulsbreiten-Modulationsregeler (PWM) der Stromversorgung 20 zugeführt wird, um die Einschaltdauer der Stromversorgung und damit den zur Verfügung stehenden Strom zu vergrößern, der an den Brenner 10 abgegeben wird. Der Fehlerverstärker 100 wird von den an Eingangsleitungen 104 und 106 anliegenden Eingangsspannungen gesteuert. An der Eingangsleitung 104 liegt ein Signal an, das einen Wert für den gesamten Momentanstrom Ia im Regelkreis 12 darstellt. Dieser Momentanstrom wird verglichen mit einem an der Eingangsleitung 106 anliegenden Sollwertstrom, wobei es sich hierbei entweder um einen ersten, voreingestellten Strom für den Pilotlichtbogenbetrieb oder einen zweiten voreingestellten Strom für den eigentlichen Schneidbetrieb handeln kann. Hierfür ist ein üblicher Betriebszustand-Auswahlschalter 120 vorgesehen, dem noch weitere Zusatzschalter 122 und 124 zugeordnet sind, die in Fig. 2 dargestellt sind. Der Auswahlschalter 120 kann wahlweise so geschaltet werden, daß an ihm entweder ein erstes Eingangssignal 130 oder ein zweites Eingangssignal 132 anliegt, wodurch entweder der Schalter 122 oder der Schalter 124 geschlossen wird. Wenn der Betriebszustand-Auswahlschalter 120 über seine Klemme 140 am Stromeingang 130 angeschlossen wird, hat dies zur Folge, daß der Brenner 10 im Schneid- bzw. Bearbeitungsmodus betrieben wird mit einem entsprechenden, den Fehlerverstärker 100 steuernden voreingestellten Stromsollwert. Bei Auswahl des Stromeingangs 132, der für die Stromregelung des Pilotlichtbogens verantwortlich ist, wird der Fehlerverstärker 100 über den an Klemme 142 geschalteten Auswahlschalter 120 mit einem entsprechenden Stromsignal 132 beaufschlagt, um die Stromversorgung 20 zu steuern und den Strom auf den voreingestellten Stromsollwert für den Pilotlichtbogen einzuregeln. Der Pilotlichtbogenstrom liegt üblicherweise zwischen 15 und 30 Ampère. Der Schweißstrom beträgt normalerweise zwischen 50 und 60 Ampère. Wenn der Leistungsschalter 73 zwischen seiner Schließstellung und seiner offenen Stellung umgeschaltet wird, bestimmt die auch in Fig. 2 dargestellte Steuerleitung 150 die Einstellung des Betriebsartenauswahlschalters 120 je nach Stellung des Leistungsschalters 72. Im Betrieb wird der Plasmalichtbogenbrenner 10 gestartet, indem bei geschlossenem Schalter 72 zwischen Elektrode und Düse ein Zündlichtbogen A erzeugt wird. Dies kann durch eine Kontaktstarteinrichtung oder unter Einsatz von einem Hochfrequenzstartverfahren erreicht werden. Derartige Lichtbogenstarter sind als solche bekannt und müssen zur Erläuterung der vorliegenden Erfindung hier nicht beschrieben werden. Der Auswahlschalter 120 wird so geschaltet, daß er an der Klemme 142 anliegt, wodurch bewirkt wird, daß der Fehlerverstärker 100 den Ausgangsstrom Ia der Stromquelle 20 auf den eingestellten Pilotlichtbogenstrom, also im Bereich zwischen 15 und 30 Ampère einregelt. Wenn das Werkstück 40 in die Nähe der Düse 34 gebracht wird, wird der Spalt zwischen Werkstück und Elektrode ionisiert, was zur Folge hat, daß ein kleiner Strom durch den Stromsensor 60 fließt. Wenn sich das Werkstück nahe genug zum Brenner befindet und eine Bearbeitung des Werkstückes erwünscht ist, wird der Leistungsschalter 72 geöffnet und der Auswahlschalter 120 in die Stellung umgeschaltet, die in Fig. 1 dargestellt ist. Der Fehlerverstärker 100 stellt dann den Ausgangsstrom Ia auf den gewünschten Schneidstrom Ic hin ein, der bei dem bevorzugten Ausführungsbeispiel etwa 55 Ampère beträgt.

Soweit bis hierher beschrieben, wird der Plasmalichtbogenbrenner 10 weitgehend nach dem herkömmlichen Betriebsverfahren betrieben. Wenn sich während der Bearbeitung des Werkstückes 40 der Abstand zwischen diesem und der Düse 34 vergrößert, vergrößert sich auch das Arbeitsspiel bzw. die Einschaltdauer (duty cycle) der Stromversorgung, um eine erhöhte Spannung zur Verfügung zu stellen. Bei den bisher bekannten Verfahren und Einrichtungen hatte dies zur Folge, daß der Schneidlichtbogen ausgelöscht wurde, wenn das Werkstück entfernt wurde oder die Lichtbogenlänge (Überschlagabstand) über einen kontrollierbaren Wert hinaus anstieg. Mit der Erfindung wird der Lichtbogen mittels einer Lichtbogenrückzugsschaltung aufrechterhalten, die den Schalter 72 schließt, bevor es zum Erlöschen des Lichtbogens kommt, so daß der Pilotlichtbogen zwischen Elektrode und Düse weiterbrennt und der Schweißbrenner betriebsbereit bleibt, ohne neu gestartet werden zu müssen. Derartige Lichtbogenrückzugsschaltungen sind bei Plasmaeinrichtungen zwar grundsätzlich bekannt, die verbesserte Schaltung nach der Erfindung führt jedoch zu einer besonders vorteilhaften neuen Möglichkeit, den Lichtbogen zuverlässig zurückzuziehen.

Die besonders vorteilhafte, erfindungsgemäße Schaltung zum Zurückziehen des Lichtbogens sei anhand der Fig. 2 erläutert. In dieser Fig. ist im oberen Schaltungsteil die Logikschaltung zum Schalten des Leistungsschalters 72 in den Schneid- oder Bearbeitungsmodus der Einrichtung dargestellt. Diese Schaltung weist einen Komparator 200 mit Eingängen 202 und 204 sowie einem Ausgang 206 auf, wobei die am Eingang 202 anliegende Spannung eine Größe hat, die durch den Stromsensor 60 festgelegt ist, der ein Signal erzeugt, das ein Maß für den Werkstückstrom Iw durch das Werkstück 40 ist. Diese Stromgröße wird mit einem Referenzsignal Ir verglichen, das am Eingang 204 anliegt und in der Praxis üblicherweise auf 200 MilliAmpère eingestellt ist. Wenn der Werkstückstrom Iw am Eingang 202 größer wird als der Referenzstrom Ir am Eingang 204, erhält das logische Signal am Ausgang 206 einen Wert "1". Ein an der Ausgangsleitung 206 angeschlossener Inverter 210 kehrt dieses logische Signal um, so daß an seinem Ausgang das logische Signal "0" anliegt. Befindet sich nun der Auswahlschalter 120 in der Stellung für den Pilotlichtbogenmodus, in der auch der Schalter 122 hinter dem Inverter geschlossen ist, liegt das logische Signal "0" an der Leitung 80 an, wodurch der zuvor geschlossene Schalter 72 geöffnet wird. Der Leistungsschalter 72 wird also dann geöffnet, wenn sich der Schalter 122 in seiner geschlossenen Stellung für den Zündlichtbogenmodus befindet und der Werkstückstrom Iw bis auf den Wert des Referenzstroms Ir ansteigt. Zu diesem Anstieg des Werkstückstromes Iw kommt es dann, wenn das Werkstück 40 nahe genug an den Brenner 10 herangebracht wird, wodurch Ionisierung des Spaltes zwischen Werkstück 40 und Elektrode 30 eintritt und dadurch der Werkstückstrom Iw fließen kann. Sobald dieser Strom größer wird als der Referenzstrom Ir, wird das logische Signal "0" an die Leitung 80 ausgegeben und so der Brenner von seinem Zündlichtbogenmodus in den eigentlich Schneid- oder Bearbeitungsmodus umgeschaltet.

In ähnlicher Weise arbeitet auch die Lichtbogenrückzugsschaltung, die dann wirksam ist, wenn sich der Auswahlschalter 120 in der Stellung für den Schneidmodus befindet. Diese in Fig. 2 unten dargestellte Schaltung weist einen Komparator 220 auf, der dann wirksam ist, wenn der Schalter 124 geschlossen ist, um aus dem Schneidmodus umzuschalten. Der Schalter 124 wird während des Schneidbetriebes geschlossen, bei dem der Plasmalichtbogen vom Werkstück zurückgezogen wird und als Pilotlichtbogen zwischen Elektrode und Düse weiterbrennt. Um dies zu erreichen, ist der Komparator 220 mit einem ersten Eingang 222 versehen, der von einem mittleren Spannungsniveau von einem Spannungsteiler 224 beaufschlagt wird. Der Spannungsteiler ist mit seinem oberen Ende an der Klemme 140 angeschlossen und greift dort eine Spannung ab, die ein Wert für den Sollwertstrom im Schneidbetrieb ist, der vom Eingang 130 vorgegeben wird. Das untere Ende des Spannungsteilers 124 ist geerdet, so daß zwischen den einzelnen Abschnitten 224a und 224a des Spannungsteilers eine Spannung abgegriffen und über den Eingang 222 an den Komparator weitergegeben wird, die einen festen prozentualen Wert der an Klemme 140 anliegenden Spannung darstellt. Demgemäß representiert das Signal am Eingang 222 eine festen prozentualen Anteil des voreingestellten Schneidstromsollwerts Ic, auf den die Stromversorgung 20 während des Schneidbetriebes des Brenners eingeregelt wird. Der Komparator 220 hat einen zweiten Eingang über Leitung 104, die in der bevorzugten Ausführungsform der Erfindung gleichsam den Eingang in den Fehlerverstärker 100 bildet. Über den Eingang 104 könnte auch der Momentanstrom Ia bei einem Betriebszustand zugeführt werden, der ohne besonderen Bezug zu dem Fehlerverstärker ist, da eine Verbindung untereinander zwischen Fehlerverstärker und Komparator 220 nicht unbedingt erforderlich ist. Der Komparator 220 vergleicht den Momentanstrom von der Stromversorgung im Stromkreis 12 bzw. eine diesen entsprechende Spannung mit dem um einen bestimmten prozentualen Anteil verringerten voreingestellten Stromsollwert Ic bzw. der diesem entsprechende Spannung. Der Momentanstrom kann an verschiedenen Stellen des Stromkreises abgegriffen werden. Der prozentuale Anteil kann in besonders bevorzugter Ausführung der Erfindung etwa 70% des Sollwertstroms Ic betragen und liegt allgemein zweckmäßig zwischen 60 und 80% des Sollwertstroms. Beim Betrieb erzeugt der Komparator 220 ein logisches Signal "0" an seinem Ausgang 230, bis der Momentanstrom Ia unter den prozentualen Anteil des Sollwertstroms Ic sinkt, der bei dem beschriebenen Ausführungsbeispiel 70% beträgt. Im Normalbetrieb ist der Momentanstrom Ia gleich groß wie der Sollwertstrom Ic im Schneidbetriebszustand, da der Fehlerverstärker 100 die Stromversorgung 20 auf eben dieses Stromniveau einregelt. Bei Vergrößerung der Lichtbogenlänge, d.h. des Überschlagabstandes wird jedoch der Widerstand zwischen Brenner und Werkstück größer und die Stromversorung 20 ist leistungsmäßig nicht in der Lage, den Strom auf dem Sollwert Ic zu halten. In diesem Fall sinkt der Momentanstrom Ia auf einen Wert unter den Sollwertstrom Ic ab. Wenn der Strom auf einen Wert von 70% des voreingestellten Sollwertstroms Ic im Schneidmodus absinkt, erzeugt der Komparator 220 an seinem Ausgang 230 ein logisches Signal "1", das über den dann geschlossenen Schalter 124 und die Leitung 80 am Leistungsschalter 72 anliegt und bewirkt, daß dieser geschlossen wird. Sobald dies passiert, wird der Plasmalichtbogen zurück in den Brenner gezogen und brennt zwischen Elektrode und Düse weiter, wie dies in Fig. 1 dargestellt ist. Mit der vorliegenden Erfindung ist es somit möglich, die Stromversorgung 20 in ihrer Leistungsfähigkeit voll auszunutzen, ohne daß es erforderlich ist, bei irgendwelchen Referenzspannungen die Stromversorgung vor- und zurückzuschalten. Mit der Erfindung wird eine Lichtbogenrückzugsschaltung geschaffen, die auf Basis der fließenden Ströme arbeitet, wodurch ein Höchstmaß an Effizienz und nutzbarer Leistung der Stromversorgung erreicht wird.

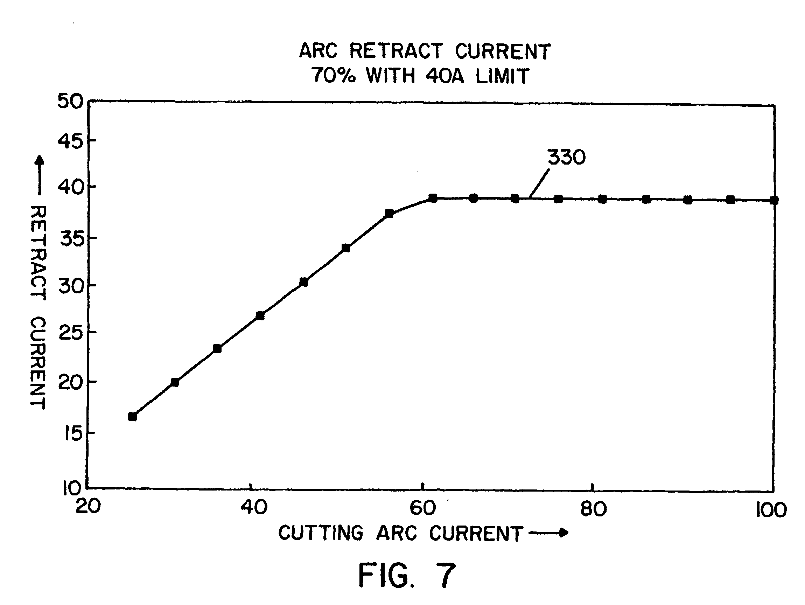

In der bevorzugten Ausführungsform der Erfindung wird der Spannungsteiler 224 dazu verwendet, das Eingangssignal am Eingang 222 als prozentualen Anteil des Sollwertschneidstroms Ic zu bilden. Alternativ wäre es ohne weiteres auch möglich, daß Eingangssignal auf Leitung 222 auf ein voreingestelltes Niveau unterhalb des Stroms Ic einzustellen, so daß es nicht als prozentualer Anteil von Ic vorliegen würde, sondern um einen bestimmten Betrag X gegenüber dem eingeregelten Stom Ic während des Schneidbetriebszustandes verringert wäre. Beim Abfall des Momentamstromes Ia käme es dann zu einem Vergleich mit dem reduzierten Sollwertstrom (Ic - x) was ebenfalls eine bestmögliche Ausnutzung der Stromversorgung ermöglichen würde. Der Vergleichsstrom, mit dem der Momentanstrom im Komparator 220 verglichen wird, kann also sowohl ein prozentualer Anteil des Sollwertstromes Ic sein, als auch gegenüber diesem um einen festeingestellten Wert verringert sein. In der bevorzugten Ausführungsform der Erfindung ist zwischen die Eingangsleitung 22 und die Erde noch eine Zener-Diode 240 geschaltet, um das maximale Spannungsniveau am Eingang 222 zu begrenzen. Die Auswirkung dieser Zener-Diode läßt sich an Fig. 7 ablesen.

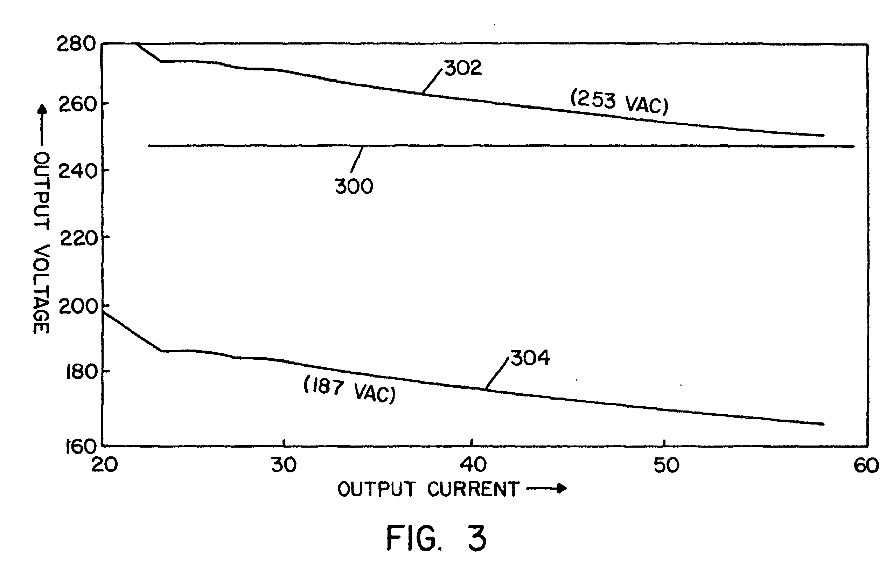

In Fig. 3 ist das Betriebsverhalten einer Stromversorgung 20 mit einer Nennspannung von 250 Volt nach Linie 300 graphisch dargestellt. Eine derartige Stromversorgungseinrichtung würde bei einer Eingangsspannung von 253 Volt Wechselstrom (VAC) üblicherweise eine Ausgangsspannung erzeugen, die in Abhängigkeit vom Ausgangsstrom gemäß der Linie 302 variiert. Dabei bestimmt die Eingangsspannung der Stromversorgung und das Wicklungsverhältnis bei dem darin zum Einsatz kommenden Transformator die Spannungskurve 302 der Stromversorgung 20. Bei einem Anstieg des Ausgangsstromes verringert sich die Ausgangsspannung. Wenn diese Spannung der Stromversorgung wie im Stand der Technik auf einen festeingestellten Spannungswert beschränkt wäre (vgl. US 5,620,617) wie dies durch die Linie 300 konstanter Spannung dargestellt ist, könnte die gesamte Leistungsfähigkeit der Stromversorgung nicht ausgeschöpft werden. Bei höheren Strömen verringert sich nämlich die zur Verfügung stehende Spannung für die Stromquelle 20 gemäß der Linie 302. Die Beschränkung des Betriebs der Stromversorgung auf eine feste, durch die Linie 300 representierte Spannung ist unwirtschaftlich. Die Stromversorgung 20 kann bei einem Strom von 25 Ampère und einer Eingangsspannung von 253 Volt Wechselstrom eine Spannung von 275 Volt liefern.

Der Ausgang der Stromversorgung 20 bei einer Eingangsspannung von 187 Volt Wechselstrom ist durch die Linie 304 im unteren Bereich der Fig. 3 dargestellt. In diesem Betriebszustand kann die Stromversorgung eine Spannung von 168 Volt bei 55 Ampère liefern. Die Kurven 302 und 304 stellen die zur Verfügung stehende Ausgangsspannung der Stromversorgung 20 bei verschiedenen Eingangsspannungen (253 Volt Wechselstrom und 187 Volt Wechselstrom) dar. Da die Stromversorgung des Betreibers der Plasmalichtbogeneinrichtung festlegt, mit welcher Eingangsspannung die Stromversorgung betrieben werden kann, ist es nicht zweckmäßig, die Lichtbogenrückzugsschaltung von vorn herein auf alle Betriebsbedingungen einzustellen, da die Ausgangsspannung in einer großen Bandbreite schwanken kann und wegen der verschiedenen möglichen Eingangsspannungen die Spannungsregelung von Lichtbogenrückzugsschaltungen, wie sie in der Vergangenheit praktiziert worden sind, mit Unsicherheiten behaftet und unwirtschaftlich sind. Demgegenüber nutzt die vorliegende Erfindung das Merkmal eines Stromabfalls aus, um die Lichtbogenrückzugsschaltung zu betreiben. Bei Verwendung von Spannungsgrößensignalen für die Lichtbogenrückzugsschaltung arbeitet die Stromversorgung entlang der Linie 300. Dies bedeutet, daß es immer dann zum Rückzug des Lichtbogens kommt und der Plasmabrenner in den Pilotlichtbogenmodus umgeschaltet wird, wenn die von der Stromversorgung gelieferte Spannung die in Linie 300 angedeutete Obergrenze von 250 Volt erreicht. Bei niedrigeren Stromstärken wird die Leistungsfähigkeit der Stromversorgung 20 also überhaupt nicht voll ausgenutzt. Wie aus Fig. 3 erkennbar ist, wäre die Stromversorgung 20 bei einem Strom von 55 Ampère tatsächlich in der Lage, eine Spannung von etwa 255 Volt zu liefern, also eine Spannung, die höher ist als die durch Linie 300 festgelegte Obergrenze von 250 Volt. Bei 25 Ampère kann die Stromversorgung 20 sogar eine Spannung von 275 Volt zur Verfügung stellen. Es ist ersichtlich, daß eine Beschneidung der Stromversorgung 20 durch Begrenzung der Spannung auf einen Höchstwert von 25 Volt unökonomisch ist. Bei den bekannten Lichtbogenrückzugsschaltungen nach dem Stand der Technik wird hierdurch der theoretisch mögliche Nutzungsfaktor der Stromversorgung um 10% verringert. Mit der Erfindung ist es durch den Komparator 320 möglich, den Lichtbogen unabhängig von den Ausgangsspannungen zurückzuziehen, insbesondere auch im Betrieb mit niedrigeren Schweiß- bzw. Schneidströmen.

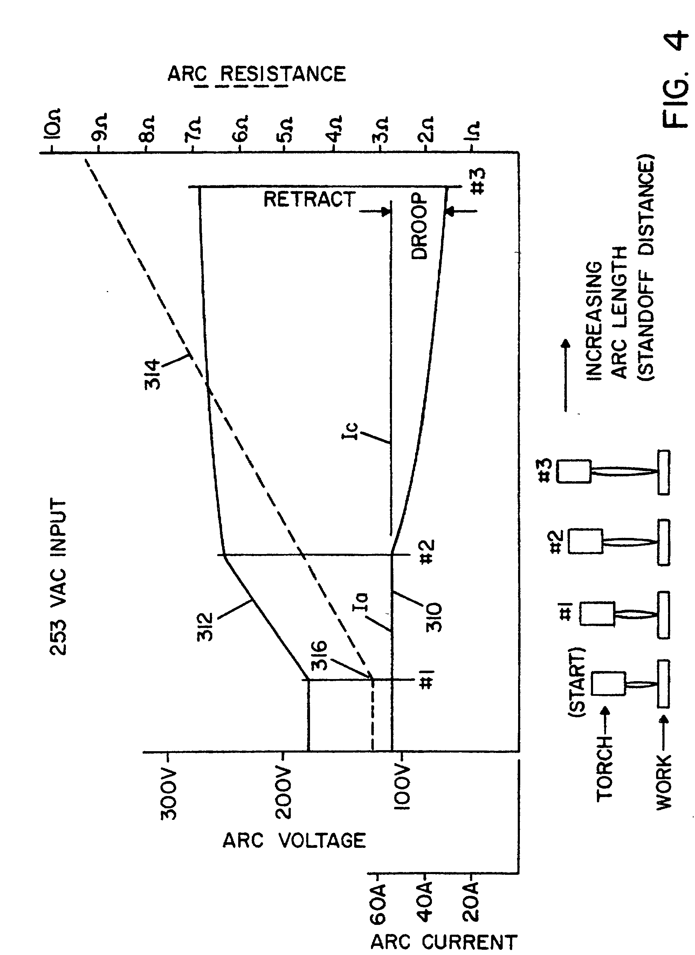

Mit der Erfindung wird der Lichtbogen zur Düse zurückgezogen, wenn die Stromversorgung 20 den durch die an der Klemme 140 anliegende Spannung vorgegebenen, erforderlichen Ausgangsstrom nicht länger zur Verfügung stellen kann. Die Wirkungsweise bzw. der Betrieb der Erfindung soll nachfolgend im Zusammenhang mit der graphischen Darstellung in Fig. 4 näher erläutert werden, anhand der der Einfluß einer größeren Lichtbogenlänge (Überschlagabstand) auf die einzelnen Parameter und Bestandteile der die Erfindung verwendenden Schaltung ersichtlich ist.

In Fig. 4 stellt die Kurve 310 den Momentanstrom Ia dar, der am Komparator 220 anliegt. Im Bereich der Betriebszustände #1 und #2, zwischen denen der Abstand zwischen Brenner und Werkstück größer wird, wird der Momentanstrom auf den Schneidstromsollwert Ic eingestellt. Wenn der Überschlagabstand noch größer wird als in Stellung #2 dargestellt ist, kommt es zu einer Verringerung des Momentanstroms bei zunehmender Lichtbogenlänge hin zu einer Anordnung, wie sie bei #3 angedeutet ist. Bei Erreichen dieser Position #3 wird ein Rückzugssignal erzeugt, da in dieser Lage der Momentanstrom Ia auf einen Wert von 70% des Stromsollwerts Ic abgefallen ist. Der Graph 312 in Fig. 4 gibt die Spannung wieder, die von der Stromversorgung 20 abgegeben wird, um den Momentanstrom Ia während des Schneidbetriebes auf den Sollwertstrom Ic hin zu einzuregeln. Bei Vergrößerung der Lichtbogenlänge, also des Abstandes zwischen Elektrode und Werkstück, von links nach rechts in Fig. 4 bleibt der Momentanstrom Ia bis zum Erreichen der Brennerposition #2 weitgehend konstant, wozu die Spannung wie durch die Linie 312 dargestellt ansteigt, um den beim länger werdenden Lichtbogen ebenfalls ansteigenden Widerstand auszugleichen. Die Abhängigkeit des Widerstandes der Lichtbogenlänge ist in Fig. 4 durch die Kurve 314 angedeutet. Wenn die Lichtbogenlänge weiter vergrößert wird, erreicht die Anordnung schließlich den Betriebszustand bei Punkt #3, in dem das Signal am Eingang 104, das ein Maß für den Momentanstrom ist, mit dem Signal am Eingang 222 übereinstimmt, das ein prozentualer Anteil des voreingestellten Sollwertstroms Ic ist. Durch den Vergleich von Ia mit dem prozentualen Teil von Ic wird ein logisches Signal "1" im Ausgang 230 erzeugt, das bewirkt, daß der Schalter 124 über die Steuerleitung 150 während des Schweiß- bzw. Schneidbetriebszustandes geschlossen wird. Hierdurch kommt es ebenfalls zu einem logischen Signal "1" auf Leitung 80, wenn die Lichtbogeneinrichtung einen Betriebszustand #3 erreicht, wodurch der Leistungsschalter 72 geschlossen und der Lichtbogen zurückgezogen wird.

Im Betriebszustand #1 nach Fig. 4 wird die Stromversorgung 20 so betrieben, daß sie einen Strom von 55 Ampère liefert, also den Sollwertstrom Ic. Die Spannung der Stromversorgung 20 ist weitgehend konstant bei etwa 180 Volt. Im Punkt #1 ist der Schneidbetrieb im dort vorhandenen Abstand zwischen Elektrode und Werkstück mit der vorhandenen Stromversorgung problemlos gewährleistet. Bei der relativen Lage von Brenner und Werkstück zueinander gemäß Punkt #1 liegt die von der Stromversorgung zur Verfügung zu stellende Spannung etwa 75 Volt unter der maximal möglichen Spannung bei 55 Ampère. Bei Vergrößerung der Lichtbogenlänge bzw. des Überschlagabstandes verschiebt sich der Betriebspunkt Richtung auf Punkt #2. In diesem Betriebspunkt ist die Lichtbogenspannung auf einen Wert angestiegen, der der absoluten Maximalspannung entspricht, die die Stromversorgung 20 bei 55 Ampère liefern kann. Da die Lichtbogenrückzugsschaltung der vorliegenden Erfindung nicht von der Spannung abhängt, wird der Lichtbogen bei Erreichen des Betriebspunktes # 2 nicht zurückgezogen, obwohl die Maximalspannung bereits erreicht ist und der Pulsbreiten-Modulator 100% seiner Leistung bringt. Dies ist die Maximalspannung, die die Stromversorgung zur Verfügung stellen kann. Gleichwohl ist es mit der vorliegenden Erfindung möglich, den Abstand zwischen Elektrode und Werkstück bzw. die Lichtbogenlänge noch weiter zu vergrößern bis zum Betriebspunkt #3, da ein Zurückziehen des Lichtbogens bei der Erfindung über den Abfall des Lichtbogenstroms gesteuert bzw. geregelt wird und nicht über irgendwelche speziellen Spannungsgrößen. Tatsächlich gibt es bei der Erfindung kein Rückzugsignal, das ausgelöst wird, wenn das Erreichen einer voreingestellten, unveränderlichen Ausgangsspannung festgestellt wird. Der Schneidlichtbogen wird auch dann noch aufrechterhalten, wenn die Maximalspannung, die die Stromversorgung zur Verfügung stellen kann, am Punkt #2 erreicht und überschritten wird.

Wenn die Lichtbogenlänge bzw. der Abstand (stand off) noch größer wird, nachdem die Stromversorgung ihre Maximalspannung für einen Strom von 55 Ampere erreicht hat, wie dies in Fig. 4 bei Punk #2 der Fall ist, fällt die Stromstärke am Lichtbogen ab. Die Stromregeleinrichtung mit dem Fehlerverstärker 100 verliert bei Erreichen des Punktes #2 bei dem Sollwertstrom von 55 Ampère und der Maximalspannung von 255 Volt ihre Wirkung. Die Stromversorgung 20 erreicht hier ihren- Vollastbetriebspunkt, in dem der Pulsbreitenmodulator zu 100% eingeschaltet ist. Wenn die Lichtbogenlänge noch größer wird, fällt der Momentanstrom rechts vom Betriebspunkt #2 in Fig. 4 ab. Wie sich durch die Widerstandskurve 314 ergibt, steigt der Widerstand zwischen den Betriebspunkten #1 und #3 des Lichtbogens proportional zur Vergrößerung des Überschlagabstandes oder der Lichtbogenlänge an. Je größer der Widerstand wird, desto größer wird auch die am Lichtbogen anliegende Spannung. Wenn die Stromversorgung auf einen konstanten Strom von 55 Ampère geregelt wird, ist ein linearer Anstieg der Lichtbogenspannung die Folge, wenn sich der Widerstand entlag der Kurve 314 verändert. Dieses Betriebsverhalten läßt sich in der Kurve 312 rechts von dem Punkt 316 ablesen. Bei Überschreiten des Betriebspunktes #2 hat die Stromversorgung 20 ihre Maximalleistung erreicht und die Ausgangsspannung hat eine Maximalwert für die bestimmten Ausgangsströme, während jedoch der Lichtbogenwiderstand mit zunehmendem Abstand der Elektrode vom Werkstück weiter kontinuierlich ansteigt. Zwischen den Betriebspunkten #1 und #2 kommt es daher zum Anstieg der Ausgangsspannung, während der Strom auf einem konstanten Wert gehalten wird. Bei Überschreiten des Betriebspunktes #2 ist diese Regelung der Stromversorgung 20 mit konstantem Ausgangsstrom nicht länger möglich, da die Maximalleistung bereits erreicht ist, was sich in dem Signal für die Maximalleistung in der Leitung 102 wiederspiegelt. Es kommt daher bei weiter zunehmendem Abstand zwischen Elektrode und Werkstück zu einem Abfall des Ausgangsstroms. Wenn der Ausgangsstrom unter einen voreingestellten Wert fällt, der ein bestimmter Bruchteil des voreingestellten Sollwertstromes ist, wird der Lichtbogen zur Düse zurückgezogen, was in Fig. 4 bei Erreichen des Betriebspunktes #3 der Fall ist.

Das in Leitung 102 anliegende, pulsbreitenmodulierte Signal ist das Ausgangssignal eines üblichen Stromregel-Fehlerverstärkers, wie er bei auf konstantem Strom geregelten Stromversorgungen für Plasmalichtbogenbrenner verwendet wird. Das Spannungssignal auf Leitung 102 regelt den Pulsbreitenmodulator der Stromversorgung 20. Im Betrieb hat eine Signalstärke von 0 Volt auf Leitung 102 zur Folge, daß ein modulierter Betriebszyklus mit minimaler Pulsbreite erzeugt wird. Bei einer Spannung von 3,5 Volt auf Leitung 102 hat der Pulsbreitenmodulator eine Einschaltdauer von 100%. Der Pulsbreitenmodulator wird zwischen 0 Volt und 3,5 Volt betrieben, wenn der Regelkreis den Strom aktiv regelt. Bei Erreichen bzw. Überschreiten des Betriebspunktes #2 bewirkt der Widerstand des Lichtbogens ein Abfallen des Schneidstromes bis zum Erreichen des Betriebspunktes #3, in dem das Signal zum Rückziehen des Lichtbogens ausgelöst wird. Dieses Lichtbogenrückzugssignal wird durch den Komparator 220 erzeugt, der im unteren Schaltkreisteil der Fig. 2 dargestellt ist. Der erste Eingang dieses Komparators ist der tatsächliche oder Momentanstrom Ia. Der zweite Eingang 222 ist ein Strom, der ein Bruchteil oder prozentualer Anteil des Sollwertstroms Ic im Schneidbetriebszustand ist. Der prozentuale Anteil beträgt bei dem bevorzugten Ausführungsbeispiel 70%, kann jedoch je nach Anwendungsfall im Bereich zwischen 40 und 80% eingestellt werden. Vorzugsweise hat das Eingangssignal auf Leitung 222 eine Größe, die einem Wert von 60 bis 80% desjenigen Stromes entspricht, der als Sollwert Ic im Schneidbetrieb vorgegeben wird. Bei dem Ausführungsbeispiel wird das Rückzugssignal für den Lichtbogen ausgelöst, wenn der Momentanstrom Ia auf 70% des Sollwertstroms Ic abgesunken ist. Bei einem voreingestellten Sollwertstrom von 55 Ampère ist dies bei etwa 38,5 Ampère der Fall. Wenn also der Momentanstrom unter 38,5 Ampère absinkt, wird der Lichtbogen durch Erzeugen eines entsprechenden Rückzugssignals in Leitung 230 zurückgezogen und brennt dann als Zündlichtbogen zwischen der Elektrode und der Düse weiter.

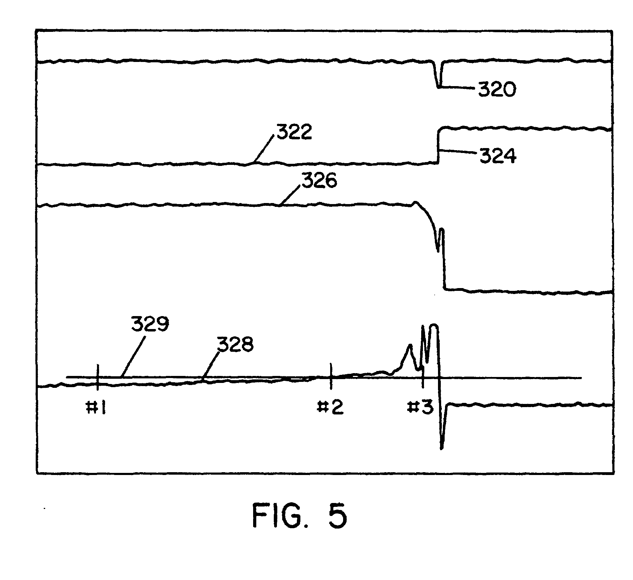

Fig. 5 zeigt Oszilloskopspuren, mit denen die Vorgänge sichtbar gemacht sind, zu denen es kommt, wenn der Zündlichtbogen vom Werkstück sehr schnell zurückgezogen wird. Die obere Spur ist ein Lichtbogenrückzugssignal 320, das am Ausgang 230 des Komparators 220 erscheint. Die zweite Spur 322 gibt den Schaltzustand des Leistungsschalters 72 wieder, der bei 324 geschlossen wird. Die Spur 326 stellt den Lichtbogenstrom Ia dar. Die Spur 328 gibt die Spannung auf Leitung 102 wieder, die den Pulsbreitenmodulator regelt. Wie sich aus der Darstellung ergibt, liegt der Betriebspunkt #1 sicher im Betriebsbereich der Stromversorgung. Der durch die Kurve 328 repräsentierte Eingang zum Pulsbreiten-modulator liegt unterhalb der Linie 329, die eine Spannung von 3,5 Volt repräsentiert. Diese Linie wird von Spur 328 im Betriebspunkt #2 geschnitten. Bei weiterer Vergrößerung der Lichtbogenlänge steigt der Lichtbogenwiderstand entlang der Kurve 314 in Fig. 4 an. Die Lichtbogenspannung vergrößert sich ebenfalls, dem die Stromquelle 20 durch Vergrößerung der Pulsbreitenmodulator-Spannung Rechnung trägt, wie sich dies aus der Kurve 328 in Fig. 5 ergibt. Bis zum Erreichen des Betriebspunktes #2 wird die Einrichtung im geregelten Zustand betrieben, in der der Ausgangsstrom fest auf 55 Ampère gehalten wird. Bei Erreichen bzw. Überschreiten des Betriebspunktes #2 hat der Pulsbreitenmodulator seine Maximalleistung erreicht, bei der die Stromversorgung den Schneidlichtbogen auf Maximalspannung bei vorgegebenem Strom hält. Wenn die Lichtbogenrückzugsschaltung spannungsgesteuert bzw. -geregelt wäre, würde das Lichtbogenrückzugsignal 320 bereits bei Erreichen des Betriebspunktes #2 erzeugt werden. Wenn also die Spannung als Steuerwert zugrundegelegt wird, erfolgt der Lichtbogenrückzug bei Erreichen der Maximalspannung. Wenn also die Lichtbogenrückzugsschaltung durch einen Vergleich der Momentanspannung mit einer vorgegebenen Sollwertspannung erfolgen würde, wie diese durch die Linie 300 in Fig. 3 eingetragen ist, würde ein Rückzugssignal spätestens zu dem Zeitpunkt erzeugt werden, zu dem der Überschlagabstand (stand off) den Betriebspunkt #2 erreicht würde. Bei der Erfindung hingegen wird der Schneid- oder Schweißlichtbogen noch deutlich über den Betriebspunkt #2 hinaus aufrechterhalten, wie dies aus Fig. 5 deutlich erkennbar ist. Mit der Erfindung ist es möglich, den Schweißlichtbogen bis zu einem Überschlagabstand aufrechtzuhalten, der erst beim Betriebspunkt #3 erreicht wird. Erst in diesem Betriebspunkt fällt der Momentanstrom Ia wegen.des Anstiegs des Lichtbogenwiderstands entlang der Linie 314 auf einen Wert von 70% des voreingestellten Sollwertstroms Ic, im vorliegenden Fall also auf etwa 38,5 Ampère, ab, woraufhin die Lichtbogen-rückzugsequenz eingeleitet wird. Dies hat zur Folge, daß der Lichtbogen wieder auf die Düse überspringt und ein Zündlichtbogen aufrechterhalten wird, wenn der eigentliche Schweißlichtbogen erlöscht.

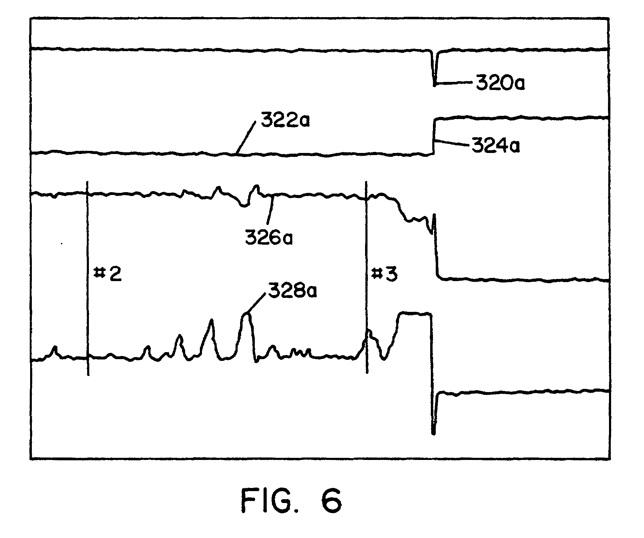

Die in Fig. 6 dargestellte Oszilloskopspuren geben die Verhältnisse wieder, zu denen es kommt, wenn der Zündlichtbogen während eines längeren Zeitraumes bei Maximalleistung der Stromversorgung 20 zwischen den Betriebspunkten #2 und #3 aufrechterhalten wird. Wenn bei der Plasmalichtbogeneinrichtung eine spannungsgeregelte Lichtbogenrückzugsschaltung zum Einsatz käme, wäre es unmöglich, den Lichtbogen bei maximaler Ausgangsspannung der Stromquelle am Brennen zu halten. Ein Betrieb der Einrichtung zwischen den Betriebszuständen #2 und #3 nach Fig. 4 wäre somit unmöglich. Sobald nämlich bei diesen älteren, bekannten Regeleinrichtungen eine feste Spannung erreicht wird, wird der Lichtbogen zurückgezogen. Mit der Erfindung hingegen kann der Schneidlichtbogen auch in einem Bereich sicher aufrechterhalten werden, der oberhalb des Betriebspunktes #2 liegt. Bei Erreichen des Betriebspunktes #2 nimmt der Strom wie in Fig. 4 dargestellt ab. Demgemäß erhöht sich die maximal zur Verfügung stehende Spannung gemäß Fig. 3, da der Ausgangsstrom hierbei nach links verschoben wird. Die Oszilloskopspuren in Fig. 6 geben im wesentlichen dasselbe wieder, wie diejenigen in Fig. 5, wobei der Brenner jedoch länger bei einem Betriebszustand #2 verharrt und die Spuren zur Unterscheidung mit einem Index a versehen sind. Die Schwankungen im Lichtbogenstrom nach der Spur 326 a sind ein Anzeichen dafür, daß sich der Betriebszustand des Lichtbogens in Richtung auf den Betriebspunkt #3 bewegt. Hierbei steigt die zur Verfügung stehende Ausgangsspannung geringfügig an und die Stromversorgung 20 regeniert sich ein wenig um den Schneidlichtbogen auch bei geringer werdendem Strom aufrechtzuhalten. Hierbei kommt es zu einem Anstieg der Ausgangsspannung, da beim Absinken des Ausgangsstromes die zur Verfügung stehende Spannung ansteigt, wie dies in Fig. 3 ersichtlich ist. Beim Vergleich von zwei Stromversorgungseinrichtungen derselben Ausgangsspannung hat eine Stromversorgung, bei die vorliegende Erfindung zum Einsatz kommt, gegenüber einer solchen mit einer Lichtbogenrückzugsschaltung nach dem Stand der Technik einen merklichen Vorsprung was die maximale Lichtbogenlänge angeht.

Wie sich aus den Fig. 5 und 6 ergibt, wird bei Erlöschen des Schneidlichtbogens ein Pilotlichtbogen aufrechterhalten. Hierzu wird der Schalter 72 geschlossen, wenn in Leitung 230 ein Rückzugssignal anliegt, das in Fig. 5 als Signal 320 und in Fig. 6 als Signal 320a dargestellt ist. Erfindungsgemäß wird der Lichtbogen zur Düse bei einem Übergangsstrom zurückgezogen, der geringer ist als der Sollwert für den Ausgangsschneidstrom der Stromversorgung. Dieses Merkmal ist in Fig. 4 an dem Punkt #3 gut zu erkennen. Bei den bisher bekanten Schaltungen wird das Lichtbogenrückzugssignal bereits bei Erreichen des Sollwerts Ic für den Schneidstrom ausgegeben. Bei der vorliegenden Erfindung wird der Lichtbogen erst bei Absinken des Schweiß- bzw. Schneidstroms auf einen Wert zurückgezogen, der geringer ist als der voreingestellte Sollwert. Indem der Lichtbogen erst bei niedrigeren Strömen zurückgezogen wird als bei dem Nennstrom der Stromversorgung oder dem voreingestellten, an der Klemme 140 anliegenden Sollwertstrom, werden Überschläge bei hohem Strom zurück zur Düse vermieden, wie sie bei den Lichtbogenrückzugschaltungen bisher häufig vorkamen. Das Umschalten in den Pilotlichtbogenbetrieb bei verringertem Betriebsstrom ermöglicht es, den Schalter 72 kleiner zu dimensionieren. Auch Beschädigungen der Düse durch die Stromüberschläge werden verringert. Bislang ist der Lichtbogen bei Erreichen des Stromes zurückgezogen worden, der an der Klemme 140 anliegt. Bei einer mit 55 Ampère betriebenen Plasmalichtbogeneinrichtung wurde der Lichtbogen also auch bei 55 Ampère in den Brenner zurückgezogen. Erst nach Zurückzug des Lichtbogens bei diesem hohen Strom von 55 Ampère wurde der Betriebsartenauswahlschalter 120 betätigt, um die Stromstärke zu verringern. Der eigentliche Übergang des Lichtbogens aus dem Bearbeitungsmodus in den Zündlichtbogenmodus jedenfalls fand bei dem höheren Stromniveau statt. Bei der Erfindung hingegen erfolgt der Rückzug des Lichtbogens erst bei Absinken des Arbeitsstroms auf 38,5 Ampère, wodurch die Größe des Schalters 72 reduziert und auch die Beschädigungen der Düse verringert werden.

Die in Fig. 2 dargestellte Zenerdiode 240 dient dazu, den Maximalwert des Rückzugstroms zu begrenzen, um Stromdurchschläge in der Düse zu kontrollieren. Der maximale Rückzugstrom wird auf 40 Ampère begrenzt. Wenn der voreingestellte Schneidstrom ansteigt, steigt auch erfindungsgemäß das Signal am Eingang 222 des Komparators 220 entsprechend an. Die Zenerdiode bewirkt beim Überschreiten des eingestellten Stroms Ic auf einen Wert oberhalb der an der Diode 240 anliegenden Strom, daß das Eingangssignal 222 auf diesen Wert eingefroren wird. Diese Betriebsweise ist in Fig, 7 dargestellt, wonach der Rückzugstrom auch bei einem Schneidstrom oberhalb von 55 Ampère fest auf etwa38 Ampère eingestellt ist.

## Patentansprüche

1. Plasmalichtbogeneinrichtung mit einem Plasmabrenner (10) mit in einer Düse (34) angeordneten Elektrode (30), einer Gleichstromversorgung (20) und einem Stromkreis (12) zum Anschluß der Stromversorgung (20) an die Elektrode (30) und ein zu bearbeitendes Werkstück (40), mit einem Leistungsschalter (72) für den Anschluß der Düse (34) an der Stromversorgung (20) im Schließzustand des Schalters (72) zur Aufrechterhaltung eines Zündlichtbogenbetriebs oder zum Unterbrechen des Anschlusses zwischen Düse (34) und Stromversorgung (20) im offenen Zustand des Schalters (72) beim Schneid- oder Schweißmodus der Einrichtung, mit einer Verstärkeranordnung (100) zum Einregeln der Stromversorgung (20) auf einen ersten Sollwertstrom (Ip) im Zündlichtbogenbetrieb und auf einen zweiten Sollwertstrom (Ic) im Schneid- oder Schweißmodus, und mit einer Lichtbogenrückzugschaltung (80) zum Umschalten des Leistungsschalters (72) aus seiner offenen in die Schließstellung, **dadurch gekennzeichnet**, **daß** die Lichtbogenrückzugschaltung (80) eine Strommeßeinrichtung (62) zum Erzeugen eines ersten Signals (104) aufweist, das ein Maß für den Momentanstrom (Ia) darstellt, der von der Stromversorgung am Stromkreis (12) anliegt, und eine Signalerzeugungsanordnung (224) für ein zweites Signal (222) aufweist, das einer Stromstärke entspricht, die geringer ist als der zweite Sollwertstrom (Ic) und daß eine Schalterbetätigungsanordnung (220,124) vorgesehen ist, um den Leistungsschalter (72) zu schließen, wenn das erste Signal und das zweite Signal (222) im wesentlichen gleich groß sind.

2. Plasmalichtbogeneinrichtung nach Anspruch 1, **dadurch gekennzeichnet, daß** die Stromstärke, die das zweite Signal (222) repräsentiert, einem prozentualen Anteil vom zweiten Sollwertstrom (Ic) entspricht.

3. Plasmalichtbogeneinrichtung nach Anspruch 2, **dadurch gekennzeichnet, daß** der prozentuale Anteil etwa im Bereich von 60-80% liegt.

4. Plasmalichtbogeneinrichtung nach einem der Ansprüche 1 bis 3, **dadurch gekennzeichnet, daß** die Schalterbetätigungsanordnung einen Komparator (220) aufweist, der ein Signal zum Schließen des Leistungsschalters (72) erzeugt, wenn das erste Signal (104) etwa gleich groß ist wie das zweite Signal (222).

5. Plasmalichtbogeneinrichtung nach einem der Ansprüche 1 bis 4, **dadurch gekennzeichnet**, **daß** die Signalerzeugungsanordnung für das zweite Signal im wesentlichen aus einem Spannungsteiler (224) besteht, der an einer Klemme (140) angeschlossen ist, an der eine Spannung anliegt, die ein Maß für den zweiten Sollwertstrom (Ic) ist und der einen Ausgangsanschluß an einer Zwischenstelle zur Erzeugung des zweiten Signals (222) hat.

6. Plasmalichtbogeneinrichtung nach einem der Ansprüche 1 bis 5, **dadurch gekennzeichnet**, **daß** die Schalterbetätigungsanordnung eine Begrenzungseinrichtung (240) zum Begrenzen des Maximalwertes des zweiten Signals (222) aufweist.

7. Plasmalichtbogeneinrichtung nach Anspruch 6, **dadurch gekennzeichnet, daß** die Begrenzungseinrichtung im wesentlichen aus einer Zenerdiode (240) besteht.

8. Verfahren zum Rückziehen eines Schneidlichtbogens einer Plasmalichtbogeneinrichtung zum Überführen des Lichtbogens aus einem Bearbeitungszustand in einem Zündlichtbogenbetrieb unter Verwendung einer in einem Düsenelement (34) angeordneten Elektrode (30), einer Gleichstromversorgungseinrichtung (20) zum Anschluß an die Elektrode und ein zu bearbeitendes Werkstück (40), eines Leistungsschalters (72), der geschlossen wird, um die Düse an die Stromversorgungseinrichtung zur Erzeugung eines Pilot- oder Zündlichtbogens anzuschließen und der geöffnet wird, um die Düse im Schneid- bzw. Schweißbetrieb der Stromversorgung zu trennen, wobei die Stromversorgungseinrichtung unter Verwendung einer Verstärkeranordnung (100) auf einen ersten Sollwertstrom (Ip) im Zündlichtbogenbetrieb und einem zweiten Sollwertstrom (Ic) im Schneid- bzw. Schweißbetrieb eingeregelt wird, mit folgenden Verfahrensschritten:
- Erzeugen eines ersten Signals (104) als Maß für den von der Stromversorgungseinrichtung (20) an dem Stromkreis (12) anliegenden Momentanstrom (Ia)
- Erzeugen eines zweiten Signals (222) als Maß für einen Strom, der geringer ist als der zweite Sollwertstrom (Ic);
- Schließen des Leistungsschalters (72) dann, wenn das erste Signal (104) und das zweite Signal (222) im wesentlichen gleich groß sind.

9. Verfahren nach Anspruch 8, **dadurch gekennzeichnet**, **daß** das zweite Signal das Maß für einen Strom darstellt, der ein prozentualer Teil des zweiten Sollwertstroms (Ic) ist.

10. Verfahren nach Anspruch 9, **dadurch gekennzeichnet**, **daß** der prozentuale Teil zwischen 60 und 80% des zweiten Sollwertstroms (Ic) liegt.

11. Verfahren nach einem der Ansprüche 8 bis 10, **dadurch gekennzeichnet, daß** der Maximalwert (330) des zweiten Signals (222) begrenzt wird.

12. Schaltungsanordnung für eine Plasmalichtbogeneinrichtung, mit einer Stromversorgungseinrichtung (20) zum Anschluß an ein Werkstück (40) einerseits und die Elektrode (30) eines Plasmabrenners (10) andererseits, dessen Brennerdüse (34) in Parallelschaltung zum Werkstück an der Stromversorgung (20) durch Schließen eines Leistungsschalters (72) anschließbar ist, mit einer Lichtbogenrückzugschaltung (80) zum Schließen des Leistungsschalters sowie mit einer Regeleinrichtung (120,100,90) zum Regeln der Stromversorgungseinrichtung auf einen ersten Sollwertstrom (Ip) in einem Zündlichtbogenbetrieb des Brenners und auf einen zweiten Sollwertstrom (Ic) im Bearbeitungsbetrieb des Brenners, **dadurch gekennzeichnet, daß** die Lichtbogenrückzugschaltung im wesentlichen aus einem Komparator (220) besteht, der den während der Bearbeitung zwischen Elektrode (30) und Werkstück fließenden Momentanstrom (Ia) mit einem dritten Sollwertstrom vergleicht, der geringer ist als der zweite Sollwertstrom (Ic) und der ein den Schalter (72) schließendes Signal (230) erzeugt, wenn der Momentanstrom (Ia) auf den dritten Sollwertstrom absinkt.

## Claims

1. Plasma arc installation with a plasma torch (10) having an electrode (30) disposed in a nozzle (34), a d.c. power supply (20) and a circuit (12) for connecting the power supply (20) to the electrode (30) and to a workpiece (40) to be machined, having a circuit breaker (72) for connecting the nozzle (34) at the power supply (20) when the breaker switch (72) is in the closed position so as to maintain operation of an ignition arc or to interrupt the connection between the nozzle (34) and the power supply (20) when the breaker switch (72) is in the open position whilst the installation is in the cutting or welding mode, having an amplifier array (100) for regulating the power supply (20) to a first specified current (Ip) in plasma arc operation and to a second specified current (Ic) in cutting or welding operation, and having a plasma arc retracting circuit (80) for switching over the circuit breaker (72) from the open to the closed position thereof, characterised in that the plasma arc retracting circuit (80) incorporates a current measuring device (62) for generating a first signal (104) constituting a measure of the instantaneous current (Ia) being applied by the current supply across the circuit (12), and incorporating a signal generating array (224) for a second signal (222) corresponding to a current intensity that is lower than the second specified current (Ic), and that a breaker operating array (220, 124) is provided in order to close the circuit breaker (72) whenever the first signal and the second signal (222) are substantially of the same size.

2. Plasma arc installation according to claim 1, characterised in that the current intensity represented by the second signal (222) corresponds to a percentage of the second specified current (Ic).

3. Plasma arc installation according to claim 2, characterised in that the percentage is roughly within the 60 to 80% range.

4. Plasma arc installation according to any of claims 1 to 3, characterised in that the breaker operating array incorporates a comparator (220) which generates a signal for closing the circuit breaker (72) whenever the first signal (104) is roughly the same size as the second signal (222).

5. Plasma arc installation according to any of claims 1 to 4, characterised in that the signal generating array for the second signal consists essentially of a voltage divider (224) which is linked to a terminal (140) across which a voltage is applied which is a measure of the second specified current (Ic) and which has an output connection at an intermediate location in order to generate the second signal (222).

6. Plasma arc installation according to any of claims 1 to 5, characterised in that the breaker operating array incorporates a limiting device (240) for limiting the maximum value of the second signal (222).

7. Plasma arc installation according to claim 6, characterised in that the limiting device consists essentially of a zener diode (240).

8. Method for retracting a cutting arc of a plasma arc installation for transferring the arc from machining status in ignition arc mode using an electrode (30) disposed in a nozzle element (34), a d.c. power supply device (20) for connection to the electrode and to a workpiece (40) to be machined, a circuit breaker (72) which is closed in order to connect the nozzle to the power supply device for generating a pilot arc or ignition arc and which is opened in order to disconnect the nozzle from the power supply in the cutting or welding mode, an amplifier array (100) being used to regulate the power supply device to a first specified current (Ip) in ignition arc mode and a second specified current (Ic) in cutting or welding mode, said method comprising the following steps:
- the generation of a first signal (104) as a measure of the instantaneous current (Ia) being applied by the power supply device (20) across the circuit (12);
- the generation of a second signal (222) as a measure of a current that is lower than the second specified current (Ic);
- the closure of the circuit breaker (72) when the first signal (104) and the second signal (222) are substantially the same in size.

9. Method according to claim 8, characterised in that the second signal represents the measure of a current that is a percentage of the second specified current (Ic).

10. Method according to claim 9, characterised in that the percentage is between 60 and 80 % of the second specified current (222).

11. Method according to any of claims 8 to 10, characterised in that the maximum value (330) of the second signal (222) is limited.

12. Circuit arrangement for a plasma arc installation, having a power supply device (20) for connection to a workpiece (40) on the one hand and to the electrode (30) of a plasma torch (10) on the other, the burner nozzle (34) of which is adapted to be connected in parallel to the workpiece at the power supply (20) by the closure of a circuit breaker (72), with a plasma arc retracting circuit (80) for closing the circuit breaker and with a regulator (120, 100, 90) for regulating the power supply device to a first specified current (Ip) when the torch is in ignition arc mode and to a second specified current (Ic) when the torch is in machining mode,
characterised in that the plasma arc retracting circuit consists essentially of a comparator (220) which compares the instantaneous current (Ia) flowing during the machining process between the electrode (30) and the workpiece with a third specified current that is lower than the second specified current (Ic) and which generates a signal (230) which closes the breaker switch (72) whenever the instantaneous current (Ia) falls to the third specified current.

## Revendications

1. Dispositif à arc-plasma comportant une torche à plasma (10) avec une électrode (30) disposée dans une buse (34), une alimentation en courant continu (20) et un circuit électrique (12) pour le raccordement de l'alimentation en courant (20) à l'électrode (30) et une pièce (40) à usiner, comportant un interrupteur de puissance (72) pour le raccordement de la buse (34) à l'alimentation en courant (20) à l'état fermé de l'interrupteur (72) pour maintenir un fonctionnement de l'arc d'allumage ou pour interrompre la connexion entre la buse (34) et l'alimentation en courant (20) à l'état ouvert de l'interrupteur (72) en mode de coupe ou de soudure du dispositif, comportant un agencement d'amplificateur (100) pour le réglage de l'alimentation en courant (20) sur une première intensité de consigne (Ip) en mode d'allumage et sur une deuxième intensité de consigne (Ic) en mode de coupe ou de soudure, et comportant un circuit de retour d'arc (80) pour la commutation de l'interrupteur de puissance (72) de sa position ouverte à sa position fermée, caractérisé en ce que le circuit de retour d'arc (80) comporte un dispositif de mesure d'intensité (62) destiné à produire un premier signal (104) qui représente une mesure de l'intensité instantanée (la), laquelle s'applique au circuit électrique (12) depuis l'alimentation en courant, ainsi qu'un dispositif de production de signaux (224) pour un deuxième signal (222), lequel correspond à une intensité qui est inférieure à la deuxième intensité de consigne (Ic), et en ce qu'il est prévu un dispositif d'actionnement d'interrupteur (220, 124), pour fermer l'interrupteur de puissance (72) lorsque le premier signal et le deuxième signal (222) sont sensiblement égaux.

2. Dispositif à arc-plasma selon la revendication 1, caractérisé en ce que l'intensité, qui représente le deuxième signal (222), correspond à un pourcentage de la deuxième intensité de consigne (Ic).

3. Dispositif à arc-plasma selon la revendication 2, caractérisé en ce que le pourcentage se situe approximativement entre 60 et 80 %.

4. Dispositif à arc-plasma selon l'une des revendications 1 à 3, caractérisé en ce que le dispositif d'actionnement d'interrupteur comporte un comparateur (220) qui produit un signal pour la fermeture de l'interrupteur de puissance (72), lorsque le premier signal (104) es à peu près égal au deuxième signal (222).

5. Dispositif à arc-plasma selon l'une des revendications 1 à 4, caractérisé en ce que le dispositif de production de signaux pour le deuxième signal est essentiellement constitué d'un diviseur de tension (224) qui est raccordé à une borne (140) à laquelle s'applique une tension qui constitue une mesure de la deuxième intensité de consigne (Ic), et qui possède une connexion de sortie à un point intermédiaire pour la production du deuxième signal (222).

6. Dispositif à arc-plasma selon l'une des revendications 1 à 5, caractérisé en ce que le dispositif d'actionnement d'interrupteur comporte un dispositif de limitation (240) destiné à limiter la valeur maximale du deuxième signal (222).

7. Dispositif à arc-plasma selon la revendication 6, caractérisé en ce que le dispositif de limitation est essentiellement constitué d'une diode Zener (240).

8. Procédé de retrait d'un arc de coupe d'un dispositif à arc-plasma pour faire passer l'arc d'un état d'usinage à un mode à arc d'allumage, par utilisation d'une électrode (30) disposée dans un élément à buse (34), d'un dispositif d'alimentation en courant continu pour le raccordement à l'électrode et une pièce (40) à usiner, d'un interrupteur de puissance (72) qui est fermé, afin de raccorder la buse au dispositif d'alimentation en courant pour produire un arc pilote ou un arc d'allumage et qui est ouvert, pour séparer la buse en mode de coupe ou mode de soudure de l'alimentation en courant, le dispositif d'alimentation en courant étant réglé, par utilisation d'un agencement d'amplificateur (100) sur une première intensité de consigne (Ip) en mode à arc d'allumage et sur une deuxième intensité de consigne (Ic) en mode de coupe ou de soudure, comportant les étapes de procédé suivantes :
- production d'un premier signal (104) en tant que mesure de l'intensité instantanée (la) qui s'applique au circuit électrique (12), depuis le dispositif d'alimentation en courant (20) ;
- production d'un deuxième signal (222) en tant que mesure d'une intensité qui est inférieure à la deuxième intensité de consigne (Ic) ;
- fermeture de l'interrupteur de puissance (72) lorsque le premier signal (104) et le deuxième signal (222) sont sensiblement égaux.

9. Procédé selon la revendication 8, caractérisé en ce que le deuxième signal constitue la mesure d'une intensité qui est un pourcentage de la deuxième intensité de consigne (Ic).

10. Procédé selon la revendication 9, caractérisé en ce que le pourcentage se situe entre 60 et 80 pour cent de la deuxième intensité de consigne (Ic).

11. Procédé selon l'une des revendications 8 à 10, caractérisé en ce que la valeur maximale (330) du deuxième signal (222) est limitée.

12. Circuit pour un dispositif à arc-plasma, comportant un dispositif d'alimentation en courant (20) pour le raccordement à une pièce à usiner (40) d'une part et à l'électrode (30) d'une torche à plasma (10) d'autre part, dont la buse (34) peut être raccordée, dans un montage en parallèle à la pièce à usiner, à l'alimentation en courant (20), par fermeture d'un interrupteur de puissance (72), comportant un circuit de retour d'arc (80) pour la fermeture de l'interrupteur de puissance ainsi qu'un dispositif de régulation (120, 100, 90) pour le réglage du dispositif d'alimentation en courant sur une première intensité de consigne (Ip) dans un mode à arc d'allumage de la torche et sur une deuxième intensité de consigne (Ic) en mode d'usinage de la torche, caractérisé en ce que le circuit de retour d'arc est essentiellement constitué d'un comparateur (220) qui compare le courant instantané (la) qui s'écoule pendant l'usinage entre l'électrode (30) et la pièce à usiner, à un troisième courant de consigne, lequel est inférieur au deuxième courant de consigne (Ic) et qui produit un signal (230) fermant l'interrupteur (72), lorsque le courant instantané (la) diminue jusqu'au troisième courant de consigne.
